# FASCICULE DE BREVET EUROPEEN

(11) **EP 1 196 001 B1**
(45) Date de publication et mention de la délivrance du brevet: **03.12.2003**
(21) Numéro de dépôt: 01000517.1
(22) Date de dépôt: 04.10.2001
(51) Int. Cl.: H04Q 7/38

(54) **Téléphone mobile avec déverrouillage sécurisé de l'accès à un réseau de télécommunication et procédé de déverrouillage associé**
Mobiltelefon mit gesicherter Freigabe des Netzwerkzugangs und entsprechendes Freigabeverfahren
Mobile telephone with secure unlocking of telecommunication network access and method of unlocking therefor

(30) Priorité: 04.10.2000 FR 0012695
(43) Date de publication de la demande: 10.04.2002
(73) Titulaire: SAGEM S.A., 75015 Paris (FR)
(72) Inventeur: DE CORDOUE, Stanislas, 95 000, CERGY (FR)
(74) Mandataire: Schmit, Christian Norbert Marie

(56) Documents cités:
- DE-C- 19 733 662
- US-A- 5 386 468
- US-A- 6 124 799

## Description

La présente invention a pour objet un téléphone mobile avec déverrouillage sécurisé de l'accès à un réseau de télécommunication de type réseau de radiotéléphonie cellulaire. Elle a également pour objet un procédé de déverrouillage de l'accès d'un téléphone mobile à un réseau de télécommunication.

Le téléphone mobile, ou combiné mobile, et le procédé selon l'invention apportent un degré de protection supplémentaire dans les différentes opérations d'échange de données intervenant lors du processus de déverrouillage de l'accès d'un téléphone mobile à un ou plusieurs réseaux de télécommunication.

Le domaine de l'invention est celui de la téléphonie mobile. L'invention sera plus particulièrement décrite dans le cadre d'un réseau obéissant à la norme GSM (Global System Mobile for communication dans la littérature anglaise), mais elle peut être mise en oeuvre dans des réseaux de radiotéléphonie cellulaires fonctionnant selon d'autres normes. Dans ce domaine, différents opérateurs de téléphonie mobile coexistent sur un même territoire. Un utilisateur d'un téléphone mobile peut ainsi choisir de téléphoner en utilisant un réseau de téléphonie cellulaire particulier mis en place par un des opérateurs disponibles. Dans la pratique, ce choix est le plus souvent effectué au moment de l'achat d'un combiné mobile. En effet, aujourd'hui, un utilisateur achète le plus souvent un téléphone mobile dans un ensemble lui fournissant le combiné mobile lui-même, ainsi qu'un engagement auprès d'un opérateur, cet engagement se présentant souvent sous la forme d'un abonnement. Ainsi, un utilisateur qui vient d'acheter un téléphone mobile ne peut utiliser ce dernier que sur un unique réseau de télécommunication mis en place par l'opérateur qui lui a vendu l'ensemble. En contrepartie, cet opérateur subventionne fortement l'achat du combiné mobile.

Techniquement, la limitation du téléphone mobile à un réseau de radiotéléphonie cellulaire déterminé est réalisé en mémorisant une valeur dans une mémoire du téléphone mobile. A chaque allumage du téléphone mobile, cette valeur cryptée est lue, décryptée et interprétée par un système d'exploitation incorporé dans le téléphone mobile. L'interprétation de cette valeur décryptée permet au téléphone mobile de déterminer avec quel réseau de télécommunication cellulaire il peut échanger des données. Cependant, cette valeur peut être changée au sein du téléphone mobile. Généralement, les différents opérateurs acceptent d'effectuer ce changement de valeur gratuitement au bout d'une certaine durée d'abonnement, ou en échange d'un paiement si cette durée minimale d'abonnement n'est pas attei nte.

Le protocole suivi pour effectuer un tel changement de valeur est le suivant : l'utilisateur doit téléphoner à l'opérateur dont il dépend. Il identifie son téléphone au moyen d'un numéro qui lui est propre. L'opérateur dispose d'un identificateur IMEI (International Mobile Equipment Identification en anglais) propre à ce téléphone, cet identificateur étant associé à une valeur. Cette valeur est communiquée par un employé de l'opérateur à l'utilisateur. L'utilisateur peut alors composer sur le clavier de son combiné mobile la valeur qui vient de lui être communiquée. Un algorithme de cryptage est alors mis en oeuvre au sein du téléphone mobile pour obtenir une valeur de déverrouillage cryptée. Ainsi, lorsque l'utilisateur allumera de nouveau son combiné mobile, la valeur de déverrouillage cryptée sera lue, décryptée au moyen d'un algorithme de décryptage, et interprétée par le système d'exploitation du téléphone. L'utilisateur pourra alors avoir accès à un autre réseau de radiotéléphonie cellulaire. Dans certains cas, il est envisagé que le téléphone mobile puisse mémoriser plusieurs valeurs de déverrouillage. Chacune de ces valeurs lui donnant accès à un réseau de radiotéléphonie cellulaire distinct.

Une des faiblesses de ce procédé est que l'algorithme de cryptage et l'algorithme de décryptage sont tous les deux contenus dans le téléphone mobile. Cette façon de procéder entre en contradiction avec le fait que des techniques de plus en plus pointues sont mises en place par des fraudeurs qui tentent d'effectuer, seul et avant la durée minimale d'abonnement, un déverrouillage de l'accès aux différents réseaux de télécommunication. Ces personnes mal attentionnées peuvent ainsi acheter dans un premier pays, où les téléphones mobiles sont subventionnés pour les motifs qui ont été précédemment expliqués, et revendre ce même téléphone mobile à un prix plus élevé dans un deuxième pays où de telles subventions n'existent pas. De telles personnes sont aujourd'hui capables de réaliser des opérations de déchargement, de décompilation et d'analyses des différents codes informatiques constituant les algorithmes de cryptage et de décryptages. Ces fraudeurs sont alors en mesure de déterminer les différentes valeurs appropriées à entrer dans le téléphone mobile pour obtenir le déverrouillage de ce dernier.

On connaît, dans l'état de la technique, le document US-A-6 124 799.

Ainsi, le fait de disposer de l'algorithme de cryptage et de l'algorithme de décryptage au sein même du combiné mobile constitue une véritable faiblesse en ce qui concerne la protection, la sécurisation du procédé de déverrouillage de l'accès des combinés mobiles aux différents réseaux de radiotéléphonie cellulaire.

Le téléphone et le procédé selon l'invention permettent de pallier l'ensemble de problèmes qui viennent d'être exposés.. En effet, dans l'invention, l'algorithme de cryptage de la valeur de déverrouillage n'est plus contenu dans le combiné mobile. Cet algorithme de cryptage est en possession uniquement des opérateurs de téléphonie cellulaire. Ainsi, la valeur de déverrouillage cryptée qui est calculée au moyen de l'algorithme de cryptage à partir de l'IMEI et d'un code spécifique est généré par l'opérateur. Selon l'invention, cette valeur est transmise vers le combiné mobile après une opération de codage supplémentaire au moyen d'un message de type message SMS (Short Message Service dans la littérature anglaise). Afin que la sécurisation soit optimale, une première opération de décodage est effectuée au sein de la carte SIM (Suscriber Identification Module en anglais) du téléphone mobile. La valeur de déverrouillage cryptée peut alors être mémorisée dans une mémoire spécifique du combiné mobile. Cette valeur pourra par la suite être lue, décryptée et interprétée à chaque nouvel allumage du combiné mobile, conformément à ce qui a été décrit précédemment. Une des caractéristiques essentielles de l'invention est donc le fait que l'algorithme de codage et l'algorithme de décodage ne sont plus tous les deux disponibles au sein du téléphone mobile. Un fraudeur n'est ainsi plus en mesure d'analyser et de comparer les codes informatiques de ces deux algorithmes et de trouver un moyen de les contourner ou de les exploiter.

L'invention concerne donc notamment un procédé de déverrouillage de l'accès d'un téléphone mobile à différents réseaux de télécommunication caractérisé en ce qu'il comporte les étapes consistant à :
- produire, chez un opérateur, un code de déverrouillage crypté au moyen d'un dispositif de cryptage en produisant une valeur de déverrouillage cryptée au moyen d'un algorithme de cryptage et à partir d'une clé de déverrouillage détenue par l'opérateur et d'un numéro spécifique au téléphone mobile, et en calculant, à partir de la valeur de déverrouillage cryptée, le code de déverrouillage crypté au moyen d'un algorithme de codage;
- transmettre au téléphone mobile, via un réseau de télécommunication cellulaire, le code de déverrouillage crypté;
- produire, au sein du téléphone mobile, à partir du code de déverrouillage crypté, une valeur de déverrouillage décryptée au moyen d'un dispositif de décryptage en déterminant, à partir du code de déverrouillage crypté, la valeur de déverrouillage cryptée au moyen d'un algorithme de décodage contenu dans une carte SIM du téléphone mobile, puis en décryptant, au moyen d'un algorithme de décryptage, la valeur de déverrouillage cryptée pour obtenir la valeur de déverrouillage décryptée.

Des étapes supplémentaires consistant à, préalablement à l'étape de décryptage :
- éteindre le téléphone mobile ;
- allumer de nouveau le téléphone mobile ;
- rechercher, au moyen d'une application de recherche de paramètres, contenue dans le système d'exploitation du téléphone mobile la valeur de déverrouillage cryptée ; puis, suite à l'étape de décryptage :
- connecter le téléphone mobile à un réseau de télécommunication cellulaire associé à la valeur de déverrouillage décryptée ;
peuvent être mises en oeuvre.

Préalablement à l'étape de connexion, une opération de comparaison au moyen d'une application de comparaison du système d'exploitation du téléphone mobile peut être effectuée entre la valeur de déverrouillage décryptée et un ensemble de valeurs contenues dans une table de valeurs, ceci pour identifier le réseau de télécommunication associé à la valeur de déverrouillage décryptée. La transmission au téléphone mobile du code de déverrouillage crypté peut être réalisée au moyen d'un message de type SMS comportant notamment un premier champ qui contient le code de déverrouillage crypté et un deuxième champ qui contient une adresse du mémoire spécifique du téléphone mobile à la quelle la valeur de déverrouillage cryptée doit être écrite.

L'étape de transmission du téléphone mobile du code de déverrouillage crypté peut être suivie des étapes supplémentaires consistant a :
- recevoir le message ;
- identifier, au moyen d'une application d'identification du système d'exploitation du téléphone mobile, le message comme étant un message de type SMS destiné à la carte SIM du téléphone mobile ;
- transmettre, au moyen d'une application de transmission du système d'exploitation, le message vers la carte SIM du téléphone mobile.

Les étapes supplémentaires consistant à :
- transmettre, au moyen d'une application de la carte SIM, la valeur de déverrouillage cryptée vers le système d'exploitation du téléphone mobile ;
- mémoriser, au moyen d'une application de mémorisation du système d'exploitation la valeur de déverrouillage cryptée à l'adresse de la mémoire spécifique contenue dans le deuxième champ ; peuvent également intervenir dans le procédé selon l'invention selon des modes de réalisations préférées de l'invention, l'algorithme de décryptage et ou décryptage sont asymétriques. Par ailleurs, l'algorithme de décodage est de préférence contenu dans la carte SIM.

Un autre objet de l'invention est un téléphone mobile avec déverrouillage sécurisé de l'accès à un réseau de télécommunication caractérisé en ce qu'il comporte :
- des moyens de réception pour recevoir un message de type SMS comportant un code de déverrouillage crypté calculé, à partir d'une clé de déverrouillage détenue par l'opérateur et d'un numéro spécifique au téléphone mobile, au moyen d'un algorithme de codage d'un opérateur et transmis par l'opérateur de téléphonie mobile ;
- des moyens de transfert, depuis les moyens de réception vers une carte SIM du téléphone mobile, du message de type SMS ;
- des moyens de décodage, dans la carte SIM, du codé de déverrouillage crypté, pour obtenir une valeur de déverrouillage cryptée ;
- des moyens de transfert, depuis la carte SIM vers une mémoire spécifique du téléphone mobile, de la valeur de déverrouillage cryptée ;
- un algorithme de décryptage pour obtenir, à partir de la valeur de déverrouillage cryptée, une valeur de déverrouillage décryptée

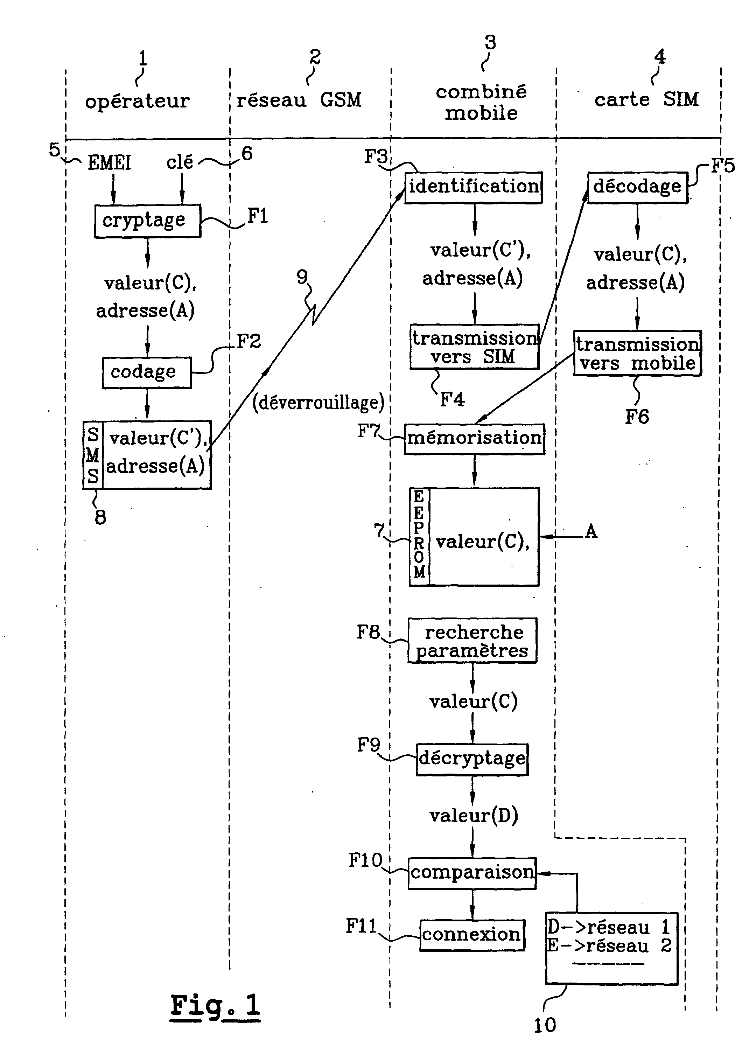

L'invention et ses différentes applications seront mieux comprises à la lecture de la description qui suit et à l'examen de la figure qui l'accompagne. Celles-ci ne sont présentées qu'à titre indicatif et nullement limitatif de l'invention. La figure 1, unique, illustre les différentes étapes mises en oeuvre par le procédé selon l'invention, qui font intervenir notamment le téléphone mobile selon l'invention.

Sur cette figure, quatre colonnes distinctes représentent les différents lieux physiques intervenant dans la mise en oeuvre du procédé. On trouve ainsi une colonne opérateur 1, une colonne réseau GSM 2, une colonne combiné mobile 3, et une colonne carte SIM 4. L'intervention de ces différents éléments permet d'obtenir un niveau de sécurisation avancé : en effet, on trouve dans ces différents lieux des éléments considérés comme très sécurisés, comme la carte SIM qui est protégée notamment par un code, et des éléments moins sécurisés, comme le combiné mobile en lui-même, qui est distribué en grande quantité. Lorsqu'un utilisateur d'un combiné mobile est en droit de déverrouiller l'accès de son combiné aux différents réseaux de télécommunication, il téléphone à l'opérateur dont il dépend ou à un autre opérateur si ce dernier possède des droits de déverrouillage de son combiné mobile. L'appel peut être passé depuis le combiné mobile lui-même, mais ce ne pas une obligation. Dans un mode de mise en oeuvre préféré du procédé selon l'invention, l'utilisateur peut appeler l'opérateur depuis son combiné mobile même si son crédit de communication est épuisé. Il peut bien évidemment appeler l'opérateur depuis tout autre téléphone. L'utilisateur donne à l'opérateur son identité sous la forme d'un code IMEI 5, ou d'un code que l'opérateur pourra associer à l'IMEI. Cette étape peut être faite de façon orale avec un interlocuteur physique, ou éventuellement avec un dispositif de reconnaissance vocale, ou encore de façon automatique par la composition sur les touches du combiné mobile par exemple le code IMEI, ou un code associé à l'IMEI, ce code étant alors envoyé sur le réseau. Pour chaque code IMEI, l'opérateur est en possession d'une clé de déverrouillage 6. Un algorithme de cryptage F1 admettant en entrée notamment le code IMEI 5 et la clé de déverrouillage 6 génère une valeur de déverrouillage cryptée C ainsi qu'une adresse A. L'adresse A correspond à une adresse dans une mémoire spécifique 7 du combiné mobile à laquelle la valeur de déverrouillage cryptée C doit être inscrite. L'adresse A n'est pas nécessairement cryptée. Cette adresse peut être spécifique à chaque combiné mobile, la valeur de déverrouillage cryptée n'étant ainsi pas nécessairement inscrite au même endroit de la mémoire spécifique. Cette particularité de l'invention donne un degré de protection supplémentaire. La mémoire spécifique 7 est par exemple une mémoire de type EEPROM. Un algorithme de codage F2 permet de coder la valeur de déverrouillage cryptée C en la transformant en un code de déverrouillage crypté C'. Par ailleurs, l'algorithme de codage permet d'élaborer un message de type SMS 8 contenant notamment un premier champ constitué par le code de déverrouillage crypté C' et par la valeur de l'adresse A. Dans un mode de mise en oeuvre particulier de l'invention, l'algorithme de codage F2 peut également coder l'adresse A mais ce n'est pas une obligation.

L'opérateur 1 procède alors à une émission 9 du message SMS 8 à travers le réseau GSM 2. Il envoie ainsi l'ensemble des données nécessaires au déverrouillage du combiné mobile 3. Le message SMS 8 est reçu au sein du combiné mobile et est traité par un système d'exploitation de ce combiné mobile. Dans un premier temps, une application d'identification F3 de ce système d'exploitation est mise en oeuvre. L'application d'identification F3 est capable de reconnaître que le message SMS 8 est un message dit SMS-toolkit, c'est à dire un message destiné à la carte SIM 4 du combiné mobile. Le code de déverrouillage crypté C' et l'adresse A sont alors orientées vers une application F4, dite application de transmission vers la carte SIM, du système d'exploitation du combiné mobile 3. L'application de transmission vers la carte SIM F4 a pour unique fonction de transmettre la valeur de déverrouillage cryptée intermédiaire C' et la valeur de l'adresse A à la carte SIM. Un algorithme de décodage F5 contenu dans la carte SIM est alors mis en oeuvre.

L'algorithme de décodage F5 est l'algorithme inverse de l'algorithme de codage F2 détenu par l'opérateur. Il permet de retrouver la valeur de déverrouillage cryptée C. De préférence, l'adresse A n'est toujours pas modifiée. La valeur de déverrouillage cryptée C et l'adresse A sont alors utilisées par une application F6 de la carte SIM, dite application de transmission vers le combiné mobile. Cette application de transmission transfère la valeur de déverrouillage cryptée C et l'adresse A vers le système d'exploitation du combiné mobile 3. Ce dernier met en oeuvre une application F7, dite application de mémorisation, qui permet d'écrire la valeur de déverrouillage cryptée C à l'adresse A dans le module de mémoire spécifique 7 de type mémoire EEPROM.

Le combiné mobile est en possession de la valeur de déverrouillage cryptée C, qui est écrite à une adresse appropriée, de telle sorte qu'au démarrage suivant du combiné mobile, l'utilisateur du combiné aura accès à un opérateur différent et/ou supplémentaire du précédent opérateur dont il dépendait. Lorsque l'utilisateur remet en marche son combiné mobile après l'avoir éteint, une application F8 du système d'exploitation du combiné mobile 3 est automatiquement mise en oeuvre. Cette application F8 est une application dite de recherche de paramètres qui a pour fonction de lire dans différentes mémoires du combiné mobile un ensemble de données qui servent à paramètrer le fonctionnement du combiné mobile, puis à interpréter ces données. Parmi les paramètres recherchés, il y a celui qui indique quel réseau de télécommunication, et donc quel opérateur va être utilisé. Ce paramètre est la valeur de déverrouillage cryptée C.

La valeur de déverrouillage cryptée C' est transmise vers un algorithme de décryptage F9, de préférence asymétrique, qui permet d'obtenir une valeur de déverrouillage décryptée D. Cette valeur de déverrouillage décryptée peut être exploitée par une application de comparaison F10. Cette application de comparaison effectue une confrontation entre la valeur de déverrouillage décryptée D et un ensemble de valeurs contenues dans une table de valeurs 10, chacune de valeur contenue dans la table de valeurs 10 étant associée à un réseau de télécommunication spécifique. Si l'application de comparaison a permis de distinguer un ou plusieurs réseaux auquel l'utilisateur peut accéder, une application de connexion F11 est mise en oeuvre pour effectuer un ensemble de réglages et de paramétrisations nécessaires à l'établissement d'une communication sur le nouveau réseau appartenant à un opérateur différent.

## Revendications

1. Procédé de déverrouillage de l'accès d'un téléphone mobile à différents réseaux de télécommunication **caractérisé en ce qu'**il comporte les étapes consistant à :
- produire, chez un opérateur (1), un code de déverrouillage crypté (C') au moyen d'un dispositif de cryptage en produisant une valeur de déverrouillage cryptée (C) au moyen d'un algorithme de cryptage (F1) et à partir d'une clé de déverrouillage (6) détenue par l'opérateur et d'un numéro (5) spécifique au téléphone mobile, et en calculant, à partir de la valeur de déverrouillage cryptée (C), le code de déverrouillage crypté (C') au moyen d'un algorithme de codage (F2) ;
- transmettre au téléphone mobile, via un réseau de télécommunication cellulaire (2), le code de déverrouillage crypté (C') ;
- produire, au sein du téléphone mobile, à partir du code de déverrouillage crypté (C'), une valeur de déverrouillage décryptée (D) au moyen d'un dispositif de décryptage en déterminant, à partir du code de déverrouillage crypté (C'), la valeur de déverrouillage cryptée (C) au moyen d'un algorithme de décodage (F5) contenu dans une carte SIM (4) du téléphone mobile, puis en décryptant, au moyen d'un algorithme de décryptage (F9), la valeur de déverrouillage cryptée (C) pour obtenir la valeur de déverrouillage décryptée (D).

2. Procédé de déverrouillage selon la revendication précédente **caractérisé en ce que** l'algorithme de décryptage (F9) est asymétrique.

3. Procédé de déverrouillage selon l'une des revendications précédentes **caractérisé en ce que** l'étape de production de la valeur de déverrouillage décryptée (D) comporte les étapes supplémentaires consistant à, préalablement à l'étape de décryptage :
- éteindre le téléphone mobile;
- allumer de nouveau le téléphone mobile;
- rechercher, au moyen d'une application de recherche de paramètres (F8), contenue dans un système d'exploitation du téléphone mobile, ta valeur de déverrouillage cryptée (C);
puis, suite à l'étape de décryptage :
- connecter le téléphone mobile à un réseau de télécommunication cellulaire associé à la valeur de déverrouillage décryptée (D).

4. Procédé de déverrouillage selon la revendication précédente **caractérisé en ce qu'**il comporte l'étape supplémentaire consistant à, préalablement à l'étape de connexion, comparer, au moyen d'une application de comparaison (F10) du système d'exploitation du téléphone mobile, la valeur de déverrouillage décryptée (D) à une table de valeurs (10) pour identifier le réseau de télécommunication associé à la valeur de déverrouillage décryptée (D).

5. Procédé de déverrouillage selon l'une des revendications précédentes **caractérisé en ce que** la transmission au téléphone mobile du code de déverrouillage crypté (C') est réalisée au moyen d'un message (8) de type message SMS.

6. Procédé de déverrouillage selon la revendication précédente **caractérisé en ce que** le message (8) comporte notamment un premier champ contenant le code de déverrouillage crypté (C'), et un deuxième champ contenant une adresse (A) d'une mémoire spécifique (7) du téléphone mobile à laquelle la valeur de déverrouillage cryptée (C) doit être écrite.

7. Procédé de déverrouillage selon la revendication précédente **caractérisé en ce que** l'adresse (A) est spécifique à chaque téléphone mobile.

8. Procédé de déverrouillage selon l'une des revendications 5 à 7 **caractérisé en ce que** l'étape de transmission au téléphone mobile du code de déverrouillage crypté (C') est suivie des étapes supplémentaires consistant à :
- recevoir le message (8);
- identifier, au moyen d'une application d'identification (F3) du système d'exploitation du téléphone mobile le message (8) comme étant un message de type SMS destiné à la carte SIM (4) du téléphone mobile;
- transmettre, au moyen d'une application de transmission (F4) du système d'exploitation, le message vers la carte SIM (4) du téléphone mobile;

9. Procédé de déverrouillage selon l'une des revendications 6 à 8 **caractérisé en ce qu'**il comporte les étapes supplémentaires consistant à :
- transmettre, au moyen d'une application (F6) de la carte SIM (4), la valeur de déverrouillage cryptée (C) vers le système d'exploitation du téléphone mobile;
- mémoriser, au moyen d'une application de mémorisation (F7) du système d'exploitation, la valeur de déverrouillage cryptée (C) à l'adresse (A) de la mémoire spécifique (7) contenue dans le deuxième champ.

10. Téléphone mobile avec déverrouillage sécurisé de l'accès à un réseau de télécommunication **caractérisé en ce qu'**il comporte :
- des moyens de réception pour recevoir un message (8) de type SMS comportant un code de déverrouillage crypté (C'), calculé, à partir d'une clé de déverrouillage (6) détenue par l'opérateur et d'un numéro (5) spécifique au téléphone mobile, au moyen d'un algorithme de codage (F2) d'un opérateur (1) de téléphonie mobile et transmis par l'opérateur (1) de téléphonie mobile;
- des moyens de transfert (F4), depuis les moyens de réception vers une carte SIM (4) du téléphone mobile, du message de type SMS (8);
- des moyens de décodage (F5), dans la carte SIM (4), du code de déverrouillage crypté (C'), pour obtenir une valeur de déverrouillage cryptée (C);
- des moyens de transfert (F6), depuis la carte SIM (4) vers une mémoire spécifique (7) du téléphone mobile, de la valeur de déverrouillage cryptée (C);
- un algorithme de décryptage (F9) pour obtenir, à partir de la valeur de déverrouillage cryptée (C), une valeur de déverrouillage décryptée (D).

11. Téléphone mobile selon la revendication précédente **caractérisé en ce que** l'algorithme de décryptage (F9) est asymétrique.

## Patentansprüche

1. Verfahren zur Freigabe des Zugangs eines Mobiltelefons zu verschiedenen Telekommunikationsnetzen, **dadurch gekennzeichnet, dass** das Verfahren folgende Schritte umfasst:
- Erstellen eines mit Hilfe einer Verschlüsselungsvorrichtung verschlüsselten Freigabecodes (C') bei einem Betreiber (1), wobei mit Hilfe eines Verschlüsselungsalgorithmus (F1) und ausgehend von einem Freigabeschlüssel (6), der sich im Besitz des Betreibers befindet, und ausgehend von einer für das Mobiltelefon spezifischen Nummer (5) ein verschlüsselter Freigabewert (C) erzeugt wird, und wobei ausgehend vom verschlüsselten Freigabewert (C) der verschlüsselte Freigabecode (C') mit Hilfe eines Codierungsalgorithmus (F2) berechnet wird;
- Übertragen des verschlüsselten Freigabecodes (C') auf das Mobiltelefon über ein zellulares Telekommunikationsnetz (2);
- Erzeugen eines entschlüsselten Freigabewertes (D) innerhalb des Mobiltelefons ausgehend vom verschlüsselten Freigabecode (C') mit Hilfe einer Entschlüsselungsvorrichtung, wobei ausgehend vom verschlüsselten Freigabecode (C') der verschlüsselte Freigabewert (C) mit Hilfe eines Decodierungsalgorithmus (F5) bestimmt wird, der in einer SIM-Karte (4) des Mobiltelefons enthalten ist, wobei danach mit Hilfe eines Entschlüsselungsalgorithmus (F9) der verschlüsselte Freigabewert (C) entschlüsselt wird, um den entschlüsselten Freigabewert (D) zu erhalten.

2. Freigabeverfahren nach dem vorhergehenden Anspruch, **dadurch gekennzeichnet, dass** der Entschlüsselungsalgorithmus (F9) asymmetrisch ist.

3. Freigabeverfahren nach einem der vorhergehenden Ansprüche, **dadurch gekennzeichnet, dass** der Schritt des Erzeugens des entschlüsselten Freigabewertes (D) zusätzliche Schritte umfasst, die vor dem Schritt des Entschlüsselns durchgeführt werden, umfassend:
- Ausschalten des Mobiltelefons;
- erneutes Einschalten des Mobiltelefons;
- Suchen des verschlüsselten Freigabewertes (C) mit Hilfe einer Parameter-Suchanwendung (F8), die in einem Betriebssystem des Mobiltelefons enthalten ist;
im Anschluss daran nach dem Entschlüsselungsschritt:
- Verbinden des Mobiltelefons mit einem zellulären Telekommunikationsnetz, das dem entschlüsselten Freigabewert (D) zugewiesen ist.

4. Freigabeverfahren nach dem vorhergehenden Anspruch, **dadurch gekennzeichnet, dass** das Verfahren den zusätzlichen Schritt umfasst, der darin besteht, vor dem Verbindungsschritt mit Hilfe einer Vergleichsanwendung (F10) des Betriebssystems des Mobiltelefons den entschlüsselten Freigabewert (D) mit einer Wertetabelle (10) zu vergleichen, um das Telekommunikationsnetz zu identifizieren, das dem entschlüsselten Freigabewert (D) zugewiesen ist.

5. Freigabeverfahren nach einem der vorhergehenden Ansprüche, **dadurch gekennzeichnet, dass** die Übertragung des verschlüsselten Freigabecodes (C') zum Mobiltelefon mit Hilfe einer Nachricht (8) vom Typ einer SMS-Nachricht erfolgt.

6. Freigabeverfahren nach dem vorhergehenden Anspruch, **dadurch gekennzeichnet, dass** die Nachricht (8) insbesondere ein erstes Feld, in dem der verschlüsselte Freigabecode (C') enthalten ist, und ein zweites Feld umfasst, in dem eine Adresse (A) eines spezifischen Speichers (7) des Mobiltelefons enthalten ist, an welcher der verschlüsselte Freigabewert (C) geschrieben sein muss.

7. Freigabeverfahren nach dem vorhergehenden Anspruch, **dadurch gekennzeichnet, dass** die Adresse (A) für jedes Mobiltelefon spezifisch ist.

8. Freigabeverfahren nach einem der Ansprüche 5 bis 7, **dadurch gekennzeichnet, dass** auf den Schritt der Übertragung des verschlüsselten Freigabecodes (C') zum Mobiltelefon zusätzliche Schritte folgen, umfassend:
- Empfangen der Nachricht (8);
- Identifizieren der Nachricht (8) als eine Nachricht vom Typ SMS, die für die SIM-Karte (4) des Mobiltelefons bestimmt ist, mit Hilfe einer Identifikationsanwendung (F3) des Betriebssystems des Mobiltelefons;
- Übertragen der Nachricht zur SIM-Karte (4) des Mobiltelefons mit Hilfe einer Übertragungsanwendung (F4) des Betriebssystems.

9. Freigabeverfahren nach einem der Ansprüche 6 bis 8, **dadurch gekennzeichnet, dass** das Verfahren die zusätzlichen Schritte umfasst, die bestehen aus:
- Übertragen des verschlüsselten Freigabewerts (C) zum Betriebssystem des Mobiltelefons mit Hilfe einer Anwendung (F6) der SIM-Karte (4);
- Speichern des verschlüsselten Freigabewerts (C) an der Adresse (A) des spezifischen Speichers (7), die im zweiten Feld enthalten ist, mit Hilfe einer Speicheranwendung (F7) des Betriebssystems.

10. Mobiltelefon mit gesicherter Freigabe des Zugangs zu einem Telekommunikationsnetz, **dadurch gekennzeichnet, dass** das Mobiltelefon umfasst:
- Empfangsmittel zum Empfangen einer Nachricht (8) vom Typ einer SMS, umfassend einen verschlüsselten Freigabecode (C'), der ausgehend von einem Freigabeschlüssel (6), der sich im Besitz des Betreibers befindet, und ausgehend von einer für das Mobiltelefon spezifischen Nummer (5) mit Hilfe eines Codierungsalgorithmus (F2) eines Mobiltelefonie-Betreibers (1) berechnet und vom Mobiltelefonie-Betreiber (1) übertragen wird;
- Mittel zum Übertragen (F4) der Nachricht (8) vom Typ SMS von den Empfangsmitteln zu einer SIM-Karte (4);
- Mittel zum Decodieren (F5) des verschlüsselten Freigabecodes (C') in der SIM-Karte (4), um einen verschlüsselten Freigabewert (C) zu erhalten;
- Mittel zum Übertragen (F6) des verschlüsselten Freigabewertes (C) von der SIM-Karte (4) zu einem spezifischen Speicher (7) des Mobiltelefons;
- einen Entschlüsselungsalgorithmus (F9), um ausgehend vom verschlüsselten Freigabewert (C) einen entschlüsselten Freigabewert (D) zu erhalten.

11. Mobiltelefon nach dem vorhergehenden Anspruch, **dadurch gekennzeichnet, dass** der Entschlüsselungsalgorithmus (F9) asymmetrisch ist.

## Claims

1. A process for unlocking access from a mobile telephone to various telecommunications networks, **characterised in that** it includes steps consisting of:
- generating an encrypted unlocking code (C') at an operator facility (1) by means of an encryption device producing an encrypted unlocking value (C) via an encryption algorithm (F1) and based on an unlocking key (6) that is maintained by the operator and on a number (5) specific to the mobile phone, and by calculating the encrypted unlocking code (C') from the encrypted unlocking value (C) using a coding algorithm (F2);
- transmitting the encrypted unlocking code (C') to the mobile phone via a cellular telecommunications network (2);
- generating a decrypted unlocking value (D) within the mobile telephone on the basis of the encrypted unlocking code (C') using a decryption device that determines the encrypted unlocking value (C) on the basis of encrypted unlocking code (C') by means of a decoding algorithm (F5) contained on a SIM card (4) of the mobile telephone, then deciphering the encrypted unlocking value (C) by means of a decryption algorithm (F9) to obtain the decrypted unlocking value (D).

2. The process for unlocking access according to the previous claim, **characterised in that** the decryption algorithm (F9) is asymmetrical.

3. The process for unlocking access according to either of the previous claims, **characterised in that** the step of generating the decrypted unlocking value (D) includes the additional steps, prior to the decryption stage, consisting of,
- switching off the mobile telephone;
- switching the mobile telephone on again;
- finding the encrypted unlocking value (C) using a parameter search application (F8) that is contained in the mobile telephone's operating system;
then, following the decryption stage:
- connecting the mobile telephone to a cellular telecommunications network associated with the decrypted unlocking value (D).

4. The process for unlocking access according to the previous claim, **characterised in that** it includes the additional step consisting of comparing the decrypted unlocking value (D) to a table of values (10) using a comparison application (F10) from the mobile telephone's operating system prior to the connection stage, in order to identify the telecommunications network associated with the decrypted unlocking value (D).

5. The process for unlocking access according to any of the previous claims, **characterised in that** transmission to the mobile phone of the encrypted unlocking code (C') is performed by means of an SMS type message (8).

6. The process for unlocking access according to the previous claim, **characterised in that** the message (8) notably includes a first field containing the encrypted unlocking code (C'), and a second field containing an address (A) of a specific memory (7) of the mobile telephone in which the encrypted unlocking value (C) is to be written.

7. The process for unlocking access according to the previous claim, **characterised in that** the address (A) is specific to each mobile telephone.

8. The process for unlocking access according to any of claims 5 to 7, **characterised in that** the step of transmitting the encrypted unlocking code (C') to the mobile phone is followed by additional steps consisting of :
- receiving the message (8);
- identifying the message (8) as an SMS type message intended for the SIM card (4) of the mobile telephone by means of an identification application (F3) in the mobile telephone's operating system;
- transmitting the message to the SIM card (4) of the mobile telephone by means of a transmission application (F4) of the operating system.

9. The process for unlocking access according to any of claims 6 to 8, **characterised in that** it includes additional steps consisting of:
- transmitting the encrypted unlocking value (C) to the mobile telephone's operating system by means of an application (F6) on the SIM card (4);
- storing the encrypted unlocking value (C) at the address (A) of the specific memory (7) contained in the second field by means of a storage application (F7) of the operating system.

10. A mobile telephone with secure unlocking of access to a telecommunications network, **characterised in that** it includes
- reception means for receiving an SMS type message (8) including an encrypted unlocking code (C') that is calculated from a unlocking key (6) held by the operator and from a number (5) specific to the mobile phone by means of a coding algorithm (F2) of a mobile telephony operator (1) and transmitted by the mobile telephony operator (1);
- means for transferring (F4) the SMS type message (8) from the means of reception to a SIM card (4) of the mobile telephone;
- means for decoding (F5) the encrypted unlocking code (C'), on the SIM card (4), to obtain an encrypted unlocking value (C);
- means for transferring (F6) the encrypted unlocking value (C) from the SIM card (4) to a specific memory (7) of the mobile telephone;
- a decryption algorithm (F9) to obtain a decrypted unlocking value (D) on the basis of the encrypted unlocking value (C).

11. The mobile telephone according to the previous claim, **characterised in that** the decryption algorithm (F9) is asymmetrical.
